# EUROPEAN PATENT SPECIFICATION

(11) **EP 3 922 687 B1**
(45) Date of publication and mention of the grant of the patent: **01.05.2024**
(21) Application number: 21176092.1
(22) Date of filing: 26.05.2021
(51) Int. Cl.: C09D 5/44

(54) **ELECTROCOATING COMPOSITION**
ELEKTROBESCHICHTUNGSZUSAMMENSETZUNG
COMPOSITION D'ÉLECTRODÉPOSITION

(30) Priority: 28.05.2020 US 202063031363 P; 21.05.2021 US 202117327566
(43) Date of publication of application: 15.12.2021
(73) Proprietor: Axalta Coating Systems IP Co., LLC, Wilmington, DE 19801 (US)
(72) Inventor: Solola, Lukman, Philadelphia, 19103 (US)
(74) Representative: LKGlobal UK Ltd.

(56) References cited:
- EP-A2- 0 107 101
- US-A1- 2010 098 842
- CLéMENT MAERTEN ET AL: "Review of Electrochemically Triggered Macromolecular Film Buildup Processes and Their Biomedical Applications", APPLIED MATERIALS & INTERFACES, vol. 9, no. 34, 30 August 2017 (2017-08-30), pages 28117-28138, XP055704878, US ISSN: 1944-8244, DOI: 10.1021/acsami.7b06319

## Description

### TECHNICAL FIELD

The technical field generally relates to electrocoating compositions for coating substrates, and more particularly relates to electrocoating compositions that provide improved edge protection and good coating appearance.

### BACKGROUND

The coating of electrically conductive substrates by an electrodeposition process also called an electrocoating process is a well-known and important industrial process. Electrodeposition of primers to automotive substrates is widely used in the automotive industry. In this process, a conductive article, such as an autobody or an auto part, is immersed in a bath of a coating composition of an aqueous emulsion of film forming polymer and acts as an electrode in the electrodeposition process. An electric current is passed between the article and a counter-electrode in electrical contact with the aqueous emulsion, until a desired coating is deposited on the article. In a cathodic electrocoating process, the article to be coated is the cathode and the counter-electrode is the anode.

Resin compositions used in the bath of a typical cathodic electrodeposition process also are well known in the art. These resins typically are made from polyepoxide resins which have been chain extended and then an adduct is formed to include amine groups in the resin. Amine groups typically are introduced through reaction of the resin with an amine compound. These resins are blended with a crosslinking agent and then neutralized with an acid to form a water emulsion, which is usually referred to as a principal emulsion.

The principal emulsion is combined with a pigment paste, coalescent solvents, water, and other additives to form the electrocoating bath. The electrocoating bath is placed in an insulated tank containing the anode. The article to be coated is the cathode and is passed through the tank containing the electrodeposition bath. The thickness of the coating that is deposited on the article being electrocoated is a function of the bath characteristics, the electrical operating characteristics, the immersion time, and the like.

The resulting coated article is removed from the bath after a set period of time and is rinsed with deionized water. The coating on the article is cured typically in an oven at sufficient temperature to produce a crosslinked finish on the article.

US2010/098842A (Dombusch) provides a process for corrosion-proofing a metallic substrate, the process comprising: (I) coating in a first stage a substrate by electroless immersion into an aqueous bath of an anticorrosion agent Kl with a pH of between 1 and 5, comprising at least (A1) one compound having as its cation a lanthanide metal and/or a d-block element metal, bar chromium, and/or having as its anion a d-block element metallate, bar chromium-containing metallates, and (A2) at least one oxidation-capable acid, bar phosphorus and/or chromium acids, such that a conversion is effect on a surface of the substrate, and (III) depositing a cathodic electrocoat material to the coated substrate in a concluding stage. The employment - as binders for the cathodically depositable electrocoat material - of amine-modified epoxy resins in combination with crosslinkers is disclosed in US2010/098842A.

The lack of edge protection or edge coverage of the composition has been a continuing problem with cathodic electrocoating compositions. There have been various additives proposed in the art to address this problem. However, there remains a desire for electrocoating compositions that have improved coverage at the edges of the coated substrate and which do not impart a negative impact on properties of the electrocoating layer, subsequent coating layers applied thereto, or both.

### SUMMARY

Cathodic electrocoating compositions giving improved edge protection and methods for coating electrically conductive substrates are provided. An exemplary cathodic electrocoating composition includes an aqueous carrier and a film forming binder dispersed in the carrier, wherein the film forming binder comprises an epoxy-amine adduct and a blocked polyisocyanate crosslinking agent. Further, the cathodic electrocoating composition includes guar gum as an edge protective agent.

In still another embodiment, a method for coating an electrically conductive substrate is provided. The method includes forming an electrodeposition bath of a cathodic electrocoating composition comprising an aqueous carrier, a film forming binder dispersed in the carrier, and an edge protective agent comprising guar gum, wherein the film forming binder comprises an epoxy-amine adduct and a blocked polyisocyanate crosslinking agent. The method also includes dipping the electrically conductive substrate into the electrodeposition bath, connecting the substrate as a cathode, and applying a current to the substrate to deposit a film on the substrate. Further, the method includes removing the substrate with the deposited film from the electrodeposition bath and baking the deposited coating film.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### DETAILED DESCRIPTION

The following detailed description is merely exemplary in nature and is not intended to limit the electrocoating compositions and methods for forming electrocoating compositions as described herein. Furthermore, there is no intention to be bound by any theory presented in the preceding background or summary or in the following detailed description.

As used herein, "a," "an," or "the" means one or more unless otherwise specified. The term "or" can be conjunctive or disjunctive. Open terms such as "include," "including," "contain," "containing" and the like mean "comprising." In certain embodiments, numbers in this description indicating amounts, ratios of materials, physical properties of materials, and/or use are may be understood as being modified by the word "about". The term "about" as used in connection with a numerical value and the claims denotes an interval of accuracy, familiar and acceptable to a person skilled in the art. In general, such interval of accuracy is ±10%. All numbers in this description indicating amounts, ratios of materials, physical properties of materials, and/or use may be understood as modified by the word "about," except as otherwise explicitly indicated. As used herein, the "%" or "percent" described in the present disclosure refers to the weight percentage unless otherwise indicated.

An electrocoating composition for coating a substrate is provided herein. The electrocoating composition may be utilized to coat any type of substrate known in the art. In embodiments, the substrate is a vehicle, automobile, or automobile vehicle. "Vehicle" or "automobile" or "automobile vehicle" includes an automobile, such as, car, van, minivan, bus, SUV (sports utility vehicle); truck; semi-truck; tractor; motorcycle; trailer; ATV (all-terrain vehicle); pickup truck; heavy duty mover, such as, bulldozer, mobile crane and earth mover; airplanes; boats; ships; and other modes of transport.

The electrocoating composition is utilized to form a coating layer on the substrate. Exemplary embodiments herein provide a full electrocoating bath to form a coating layer on a substrate. Certain embodiments utilize epoxy amine based resins or binders that are neutralized with acids to form emulsions.

Weak edge protection is a major source of corrosion for electrocoated surfaces. It has been observed that bubble or rupture defects are often formed at sharp edges of substrates being electrocoated. During the electrocoating process, extremely high current densities are experienced at sharp edges. Therefore, electrically initiated surface defects may develop and harm edge protection. Typically, efforts to improve edge protection have resulted in worsening other characteristics of the coating and coating appearance.

However, herein is described a composition and method for improving edge protection while maintaining coating appearance.

It has been surprisingly found that the use of guar gum as an edge protective agent within an electrocoating composition as described herein provides improved edge protection for films formed by electrocoating.

Thus, provided herein is an electrocoating composition, such as for use as an electrodeposition bath, with improved edge protection and good coating appearance that includes an aqueous carrier; a film forming binder dispersed in the carrier and comprising an epoxy-amine adduct and a blocked polyisocyanate crosslinking agent; a pigment paste; and an edge protective comprising, consisting essentially of, or consisting of guar gum. In exemplary embodiments, the edge protective agent is present in amounts of from 0.1 to 1.0% based on binder solids.

### Guar Gum

Guar gum, also called guaran, is a galactomannan polysaccharide extracted from the seeds of guar beans that has thickening and stabilizing properties. For forming guar gum, guar seeds are typically mechanically dehusked, hydrated, milled and screened before processing into a powder. Chemically, guar gum is an exo-polysaccharide composed of the sugars galactose and mannose. The backbone is a linear chain of β 1,4-linked mannose residues to which galactose residues are 1,6-linked at every second mannose, forming short side-branches.

In example embodiments, guar gum is incorporated into the electrocoating composition. The guar gum may be useful in the electrocoating composition at levels of from 0.1 to 1.0, such as from 0.15 to 0.6, for example from 0.2 to 0.5, such as from 0.2 to 0.4, for example from 0.25 to 0.35, such as 0.3, percent by weight, the percentage by weight being based on weight of binder solids of the composition.

In certain embodiments, the guar gum is present in the composition in amounts of at least 0.02, such as at least 0.04, for example at least 0.06, such as at least 0.08, for example at least 0.1, such as at least 0.12, for example at least 0.14, such as at least 0.16, for example at least 0.18, such as at least 0.2, for example at least 0.22, such as at least 0.24, for example at least 0.26, such as at least 0.28, for example at least 0.3, percent by weight, based on weight of resin solids of the composition.

In certain embodiments, the guar gum is present in the composition in amounts of at most 1.0, such as at most 0.9, for example at most 0.8, such as at most 0.7, for example at most 0.6, such as at most 0.55, for example at most 0.5, such as at most 0.45, for example at most 0.425, such as at most 0.4, for example at most 0.38, such as at most 0.36, for example at most 0.35, such as at most 0.34, for example at most 0.33, such as at most 0.32, for example at most 0.31, such as at most 0.3, percent by weight, based on weight of resin solids of the composition.

### Film Forming Binder

Most of the solids in the electrocoated film come from the backbone resin or film forming binder in the electrocoating bath. Common cathodic electrocoating backbone emulsions include an acid-neutralized watersoluble binder of an epoxy amine adduct blended with a crosslinking agent.

Exemplary binders and crosslinking agents are disclosed in U.S. Pat. No. 4,419,467. Typical crosslinking agents are based on blocked isocyanates which are prepared by reacting isocyanates such as hexamethylene diisocyanate, cyclohexamethylene diisocyanate, toluene diisocyanate, methylene diphenyl diisocyanate, or other suitable isocyanates, with blocking agents like oximes, alcohols, or caprolactams, which block the reactive isocyanate functionality. These blocking agents separate only during baking and provide a reactive isocyanate group which can react with hydroxy or amine group and form crosslink networks. According to the invention, the film forming binder comprises an epoxy-amine adduct and a blocked polyisocyanate crosslinking agent.

An exemplary film forming binder contains from 35 to 45, such as 40, percent by weight solids.

### Additives

Further additives such as catalysts, anti-crater additives, etc., can be added to the emulsion to achieve desired properties.

### Pigment Paste

Another major source of solids in electrocoated films come from pigments that are incorporated in the electrocoating composition in the form of a paste. Pigment paste may be prepared by de-agglomerating pigment particles and dispersing them in a grinding vehicle. An exemplary grinding vehicle includes a resin (grinding resin), water and additives like wetting agents, surfactants, catalyst and defoamers. Any suitable known pigment grinding vehicle may be used. After grinding, the particle size of the pigment should be as small as practical; generally, the particle size is from 6 to 8 using a Hegman grinding gauge.

Exemplary pigments for use in the electrocoating composition include titanium dioxide, barium sulfate, carbon black, hydrated aluminum silicate, basic lead silicate, strontium chromate, iron oxide, clay and the like. In certain embodiments, the pigment paste may include an anti-corrosive pigment or blends of anticorrosive pigments. Exemplary anti-corrosive pigments include metallic chromates, phosphates, phosphites, borates, borosilicates, phosphosilicates, molybdates, oxides, and rare earth compounds. Organic anticorrosive agents may optionally also be present; they include benzotriazoles, morpholines, azoles, calcium alkyl-aryl sulfonates, diamines, and metal salts of dinonylnapathalene sulfonates.

An exemplary pigment may have a pigment to binder weight ratio of from 2:1 to 6:1. An exemplary pigment paste may contain from 40 to 65, such as 45 to 55, percent by weight solids. General cathodic electrocoating pigment pastes can be used, such as those disclosed in U.S. Pat. No. 6,207,731.

After formation of an exemplary electrocoating composition, the cathodic electrocoating composition has a pigment to binder weight ratio of less than 0.5:1, such as less than 0.4:1, for example from 0.1:1 to 0.4:1, such as from 0.15:1 to 0.4:1. The pigment to binder weight ratio may be an important parameter. Generally, higher pigment to binder weight ratios in the composition can affect the flow of the composition and therefore, appearance.

### EXAMPLES

Examples 1 and 2 were prepared and tested for edge protection performance.

### Preparation of Guar Gum Stock Solution

A 2,000g 1% guar gum stock solution was prepared by dissolving 20g of guar gum in 1,980g of deionized water. This solution was then stirred overnight before use.

### Preparation of Electrocoating Composition for Use as Electrodeposition Bath

Each of the baths was prepared by combining a suitable emulsion with additives, water and pigment paste. This mixture was stirred for at least 4 hours before panels were electrocoated via the application of a current of from 170 to 280 volts to deposit a film having a film thickness of from 0.8 to 1.0 mils (from 20.23 to 25.4 microns). The coated panels were analyzed for surface roughness using a profilometer and edge corrosion resistance using a corrosion testing method.

**TABLE 1: Composition of Example Baths**

| **Electrocoating composition components** | **Example 1** | **Example 2** |
|---|---|---|
| Backbone emulsion (40% solids) | 1516.4 g | 1514.1 g |
| DI Water | 1887.2 g | 1817.4 g |
| Pigment paste (50% solids) | 296.3 g | 274.4 g |
| Guar Gum as Edge Protective Agent | 0 | 0.3% Guar gum solids based on resin solids |

**TABLE 2: Properties of Example Baths**

| | **Example 1** | **Example 2** |
|---|---|---|
| Bath Solid (%) | 20% | 15% |
| Bath P/B (%) | 18% | 18% |
| pH | 6.08 | 6.03 |
| Conductivity | 1945 | 2093 |
| Ra (µm) | 0.25 | 0.60 |
| VDA 233-102 | 4.3 | 1 |

In Example 1, no edge protective agent was included. In Example 2, the electrocoating composition was formed with 0.3% guar gum solids, based on resin solids and represents an embodiment of the electrocoating composition with improved edge protection.

The edge protection performance was characterized via an accelerated cyclic corrosion (VDA 233-102: Cyclic corrosion testing of materials & components in automotive construction), and the coating appearance was evaluated by surface roughness (Ra). As can be seen, the coating appearance (Ra) of Example 2 was sufficient while the edge protection was improved.

The electrocoating composition may be described herein as an aqueous dispersion. The term "dispersion" as used within the context herein is believed to be a two-phase translucent or opaque aqueous resinous binder system in which the binder is in the dispersed phase and water the continuous phase. The average particle size diameter of the binder phase may be 0.1 to 10 microns, such as less than 5 microns. The concentration of the binder in the aqueous medium in general is not critical, but ordinarily the major portion of the aqueous dispersion is water. The aqueous dispersion usually contains from 3 to 50 percent, such as 5 to 40 percent by weight binder solids. Aqueous binder concentrates which are to be further diluted with water when added to an electrocoating bath, generally have a range of binder solids of 10 to 30 percent weight.

As compared to conventional aqueous cathodic electrocoating compositions, a cathodic electrocoating composition formed with the above-described edge protective agent exhibited improved edge protection and good coating appearance.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. A cathodic electrocoating composition comprising:
an aqueous carrier;
a film forming binder dispersed in the carrier, wherein the film forming binder comprises an epoxy-amine adduct and a blocked polyisocyanate crosslinking agent; and,
an edge protective agent comprising guar gum.

2. The cathodic electrocoating composition of claim 1, wherein the guar gum is present in amounts of from 0.05 to 2.0 wt. % based on binder solids.

3. The cathodic electrocoating composition of claim 1 or claim 2, wherein the guar gum is present in amounts of from 0.1 to 1.0 wt.% based on binder solids.

4. The cathodic electrocoating composition of any one of claims 1-3, wherein the guar gum is present in amounts of from 0.15 to 0.6 wt.% based on binder solids.

5. The cathodic electrocoating composition of any one of claims 1-4, wherein the guar gum is present in amounts of from 0.25 to 0.35 wt.% based on binder solids.

6. The cathodic electrocoating composition of any one of claims 1-5, wherein the film forming binder contains from 35 to 45 percent by weight solids.

7. The cathodic electrocoating composition of any one of claims 1-6, further comprising a pigment paste.

8. The cathodic electrocoating composition of any one of claims 1-7, further comprising a pigment paste, wherein the pigment paste contains from 45 to 55 percent by weight solids, and wherein the film forming binder contains from 35 to 45 percent by weight solids.

9. The cathodic electrocoating composition of any one of claims 1-8, wherein the edge protective agent consists essentially of, or consists of, guar gum.

10. A method for coating an electrically conductive substrate, comprising:
forming an electrodeposition bath of a cathodic electrocoating composition according to any one of claims 1-9;
dipping the electrically conductive substrate into the electrodeposition bath;
connecting the substrate as a cathode;
applying a current to the substrate to deposit a film on the substrate;
removing the substrate with the deposited film from the electrodeposition bath; and,
baking the deposited coating film.

## Patentansprüche

1. Zusammensetzung für kathodische Elektrobeschichtung umfassend:
einen wässrigen Träger;
ein filmbildendes Bindemittel, das in dem Träger dispergiert ist, wobei das filmbildende Bindemittel ein Epoxyaminaddukt und ein geblocktes Polyisocyanatvernetzungsmittel umfasst; und
ein Kantenschutzmittel, das Guargummi umfasst.

2. Zusammensetzung für kathodische Elektrobeschichtung nach Anspruch 1, wobei der Guargummi in Mengen von 0,05 bis 2,0 Gew.-%, auf Bindemittelfeststoffe bezogen, vorliegt.

3. Zusammensetzung für kathodische Elektrobeschichtung nach Anspruch 1 oder Anspruch 2, wobei der Guargummi in Mengen von 0,1 bis 1,0 Gew.-%, auf Bindemittelfeststoffe bezogen, vorliegt.

4. Zusammensetzung für kathodische Elektrobeschichtung nach einem der Ansprüche 1-3, wobei der Guargummi in Mengen von 0,15 bis 0,6 Gew.-%, auf Bindemittelfeststoffe bezogen, vorliegt.

5. Zusammensetzung für kathodische Elektrobeschichtung nach einem der Ansprüche 1-4, wobei der Guargummi in Mengen von 0,25 bis 0,35 Gew.-%, auf Bindemittelfeststoffe bezogen, vorliegt.

6. Zusammensetzung für kathodische Elektrobeschichtung nach einem der Ansprüche 1-5, wobei das filmbildende Bindemittel von 35 bis 45 Gewichtsprozent Feststoffe enthält.

7. Zusammensetzung für kathodische Elektrobeschichtung nach einem der Ansprüche 1-6, ferner eine Pigmentpaste umfassend.

8. Zusammensetzung für kathodische Elektrobeschichtung nach einem der Ansprüche 1-7, ferner eine Pigmentpaste umfassend, wobei die Pigmentpaste 45 bis 55 Gewichtsprozent Feststoffe enthält und wobei das filmbildende Bindemittel 35 bis 45 Gewichtsprozent Feststoffe enthält.

9. Zusammensetzung für kathodische Elektrobeschichtung nach einem der Ansprüche 1-8, wobei das Kantenschutzmittel im Wesentlichen aus oder aus Guargummi besteht.

10. Verfahren zum Beschichteten eines elektrisch leitfähigen Substrats, umfassend:
Bilden eines Elektrotauchlackierungsbads aus einer Zusammensetzung für kathodische Elektrobeschichtung nach einem der Ansprüche 1-9;
Eintauchen des elektrisch leitfähigen Substrats in das Elektrotauchlackierungsbad;
Anschließen des Substrats als Kathode;
Anlegen eines Stroms an das Substrat, um einen Film auf dem Substrat abzusetzen;
Entfernen des Substrats mit dem abgesetzten Film aus dem Elektrotauchlackierungsbad; und
Brennen des abgesetzten Beschichtungsfilms.

## Revendications

1. Composition de revêtement électrolytique cathodique comprenant :
un support aqueux ;
un liant filmogène dispersé dans le support, dans lequel le liant filmogène comprend un adduit d'époxyamine et un agent de réticulation polyisocyanate bloqué ; et,
un agent de protection des bords comprenant de la gomme de guar.

2. Composition de revêtement électrolytique cathodique selon la revendication 1, dans laquelle la gomme de guar est présente en des quantités allant de 0,05 à 2,0 % en poids sur la base des matières solides du liant.

3. Composition de revêtement électrolytique cathodique selon la revendication 1 ou la revendication 2, dans laquelle la gomme de guar est présente en des quantités allant de 0,1 à 1,0 % en poids sur la base des matières solides du liant.

4. Composition de revêtement électrolytique cathodique selon l'une quelconque des revendications 1 à 3, dans laquelle la gomme de guar est présente en des quantités allant de 0,15 à 0,6 % en poids sur la base des matières solides du liant.

5. Composition de revêtement électrolytique cathodique selon l'une quelconque des revendications 1 à 4, dans laquelle la gomme de guar est présente en des quantités allant de 0,25 à 0,35 % en poids sur la base des matières solides du liant.

6. Composition de revêtement électrolytique cathodique selon l'une quelconque des revendications 1 à 5, dans laquelle le liant filmogène contient de 35 à 45 % en poids de matières solides du liant.

7. Composition de revêtement électrolytique cathodique selon l'une quelconque des revendications 1 à 6, comprenant en outre une pâte de pigment.

8. Composition de revêtement électrolytique cathodique selon l'une quelconque des revendications 1 à 7, comprenant en outre une pâte pigmentaire,
dans laquelle la pâte pigmentaire contient de 45 à 55 pour cent en poids de matières solides, et dans laquelle le liant filmogène contient de 35 à 45 pour cent en poids de matières solides.

9. Composition de revêtement électrolytique cathodique selon l'une quelconque des revendications 1 à 8, dans laquelle l'agent de protection des bords consiste essentiellement en, ou est constitué de, gomme de guar.

10. Procédé de revêtement d'un substrat électriquement conducteur, comprenant :
la formation d'un bain d'électrodéposition d'une électrodéposition cathodique selon l'une quelconque des revendications 1 à 9 ;
le trempage du substrat conducteur d'électricité dans le bain d'électrodéposition ;
le raccordement du substrat en tant que cathode ;
l'application d'un courant au substrat pour déposer un film sur le substrat ;
le retrait du substrat avec le film déposé du bain d'électrodéposition ; et,
la cuisson du film de revêtement déposé.
